# EUROPÄISCHE PATENTSCHRIFT

(11) **EP 3 729 423 B1**
(45) Veröffentlichungstag und Bekanntmachung des Hinweises auf die Patenterteilung: **28.07.2021**
(21) Anmeldenummer: 19727645.4
(22) Anmeldetag: 28.05.2019
(51) Int. Cl.: G10L 15/22

(54) **VERFAHREN ZUM BETREIBEN EINER SCHALLAUSGABEEINRICHTUNG EINES KRAFTFAHRZEUGS, SPRACHANALYSE- UND STEUEREINRICHTUNG, KRAFTFAHRZEUG, UND KRAFTFAHRZEUGEXTERNE SERVEREINRICHTUNG**
METHOD FOR OPERATING A SOUND OUTPUT DEVICE OF A MOTOR VEHICLE, VOICE-ANALYSIS AND CONTROL DEVICE, MOTOR VEHICLE AND MOTOR-VEHICLE-EXTERNAL SERVER DEVICE
PROCÉDÉ POUR FAIRE FONCTIONNER UN DISPOSITIF D'ÉMISSION SONORE D'UN VÉHICULE AUTOMOBILE, DISPOSITIF D'ANALYSE ET DE COMMANDE DE LA PAROLE, VÉHICULE AUTOMOBILE, ET DISPOSITIF SERVEUR EXTERNE AU VÉHICULE AUTOMOBILE

(30) Priorität: 04.06.2018 DE 102018208707
(43) Veröffentlichungstag der Anmeldung: 28.10.2020
(73) Patentinhaber: Audi AG, 85045 Ingolstadt (DE)
(72) Erfinder: ALBL, Sebastian, 85080 Gaimersheim (DE)
(86) Internationale Anmeldenummer: PCT/EP2019/063822
(87) Internationale Veröffentlichungsnummer: WO 2019/233827

(56) Entgegenhaltungen:
- WO-A1-2017/078926
- DE-T5-112015 006 350
- US-A1- 2017 021 768
- US-A1- 2017 030 133
- US-B1- 9 429 947
- YUN-NUNG CHEN ET AL: "Deep Learning for Dialogue Systems", PROCEEDINGS OF ACL 2017, TUTORIAL ABSTRACTS, 1. Januar 2017 (2017-01-01), Seiten 8-14, XP055614486, Stroudsburg, PA, USA DOI: 10.18653/v1/P17-5004

## Beschreibung

Die Erfindung betrifft ein Verfahren zum Betreiben einer Schallausgabeeinrichtung eines Kraftfahrzeugs durch eine Sprachanalyse- und Steuereinrichtung. Als Schallausgabeeinrichtung wird dabei ein Gerät oder eine Gerätekomponente zum Ausgeben eines Audiosignals verstanden, die zum Beispiel einen Lautsprecher, vorzugsweise mehrere Lautsprecher, aufweisen kann. Die Schallausgabeeinrichtung ist dabei dazu ausgestaltet und derart an dem Kraftfahrzeug angeordnet, dass ein Ausgabesignal an eine Außenumgebung des Kraftfahrzeugs ausgegeben werden kann. Das Audiosignal ist dabei zum Beispiel eine Sprachausgabesignal, also ein Signal, dass einen gesprochenen Text beschreibt.

In Kraftfahrzeugen werden Schallausgabeeinrichtungen, zum Beispiel Außensound-Lautsprechersysteme (zum Beispiel Acustic Vehicle Alerting Systeme, "AVAS") zum Warnen von zum Beispiel Fußgängern beim elektrischen Fahren verbaut. Einem Fußgänger kann so beispielsweise ein Motorengeräusch ausgegeben werden, sodass dieser das Kraftfahrzeug hört. Der Fußgänger wird so vor dem Kraftfahrzeug gewarnt.

Die Kommunikation des Kraftfahrzeugs im Innenraum mit dem Fahrer oder einem Passagier erfolgt über Lautsprecher im Innenraum. Der Passagier oder der Fahrer des Kraftfahrzeugs kann über die Innenraum-Lautsprecher mit dem Fahrzeug "kommunizieren" und so beispielsweise ein Infotainmentsystem per Spracheingabe bedienen. Bei einem pilotiert fahrenden Kraftfahrzeug ergibt sich diese Möglichkeit jedoch nicht, sobald sich die Person nicht mehr im Innenraum befindet oder zum Beispiel keinen Schlüssel für das Kraftfahrzeug hat.

Die EP 1 987 986 A2 beschreibt eine Kommunikations-Gruppe für ein Kraftfahrzeug, um einen Audio-Sound innerhalb und außerhalb des Kraftfahrzeugs zu kommunizieren. Hierdurch kann ein Insasse des Kraftfahrzeugs mit einer Person außerhalb des Kraftfahrzeugs kommunizieren, ohne das Fenster herunterkurbeln zu müssen.

Aus der US 2017/0021768 A1 ist ein Kraftfahrzeug-Steuergerät bekannt, das eine Kamera aufweist, die dazu ausgelegt ist, ein Bild um das Kraftfahrzeug herum zu fotografieren; eine Bildschirmeinheit umfasst, die dazu ausgelegt ist, das aus der Kamera erhaltene Bild darzustellen; zumindest einen Geräuschsensor, der auch in dem Kraftfahrzeug angeordnet ist und dazu ausgelegt ist, ein Geräusch zu sensieren, das innerhalb oder außerhalb des Kraftfahrzeugs generiert wurde; mindestens eine Geräuschausgabeeinheit, die an dem Kraftfahrzeug angeordnet ist und dazu ausgelegt ist, ein Geräusch außerhalb oder innerhalb des Kraftfahrzeugs auszugeben; und ein Steuergerät, das dazu ausgelegt ist, eine Situation des Kraftfahrzeugs zu sensieren, wobei die Situation auf dem innerhalb oder außerhalb des Kraftfahrzeugs generierten Geräusch basiert, und zum Steuern mindestens einem der Geräuschsensoren, der Geräuschausgabeeinheit, und der Bildschirmeinheit, um Informationen auszugeben, die auf der sensierten Situation des Kraftfahrzeugs basieren.

Die DE 10 2010 048 470 A1 beschreibt ein Fahrzeug-Fußgänger-Kommunikationssystem, das eine fahrzeugbasierte Vorrichtung umfasst, die einen Sender und einen Empfänger zum Übertragen der globalen Positionierung des Fahrzeugs besitzt.

Die DE 11 2015 006 350 T5 beschreibt ein System, eine Einrichtung, ein Verfahren und ein Computerprogrammprodukt zur Bereitstellung von Informationen über ein Fahrzeug.

Bei einer Warnung des Fußgängers durch ein Alarmsignal, das lediglich ein Motorengeräusch oder zum Beispiel ein Warnton ist, kann der Fußgänger zwar wirksam auf eine Gefahr aufmerksam gemacht werden. Die detaillierten Umstände oder Hintergründe des Warnsignals können durch den Fußgänger jedoch erst dann erfasst werden, wenn er sich einen Überblick über die gesamte Situation verschafft.

Eine der Erfindung zugrunde liegende Aufgabe ist das Steigern einer Effizienz beim "Kommunizieren" des Kraftfahrzeugs mit einer Person, die sich in einer Außenumgebung des Kraftfahrzeugs befindet.

Die gestellte Aufgabe wird durch das erfindungsgemäße Verfahren und die erfindungsgemäßen Vorrichtungen gemäß der nebengeordneten Patentansprüche gelöst. Vorteilhafte Weiterbildungen sind durch die Unteransprüche gegeben.

Die Erfindung basiert auf der Idee, eine Sprachanalyse- und Steuereinrichtung bereitzustellen, die anhand einer Spracheingabe einer Person, die sich in einer Außenumgebung des Kraftfahrzeugs befindet, einen Sprachnachrichteninhalt der erfassten Sprachnachricht und einen thematischen Kontext der erfassten Sprachnachricht ermittelt. In Abhängigkeit davon wird ein Sprachausgabesignal bereitgestellt, dass einen Kontext-bezogenen Antworttext zu der erfassten Sprachnachricht beschreibt. Dieses Signal wird durch die Schallausgabeeinrichtung an die Außenumgebung des Kraftfahrzeugs ausgegeben.

Dadurch wird vorteilhaft eine Warnung von Fußgängern oder Fahrradfahrern verbessert. Durch das erfindungsgemäße Verfahren und die erfindungsgemäßen Vorrichtungen kann das Kraftfahrzeug eine personalisierte Sprachausgabe bereitstellen, und so mit der Person außerhalb des Kraftfahrzeugs situationsspezifisch und/oder benutzerspezifisch kommunizieren und dementsprechend einen Dialog führen. Hierdurch kann zum Beispiel eine intensivere Kommunikation zwischen einem Fahrzeughalter, optional auch seinem Familienumfeld, und dem Kraftfahrzeug erfolgen. Mit anderen Worten interagiert das Kraftfahrzeug mit der Person. Die Person kann eine persönliche Bindung zum Kraftfahrzeug aufbauen, und dieses als persönlichen Ansprechpartner betrachten.

Die Kommunikationsmöglichkeit und/oder eine Bestätigung seitens des Kraftfahrzeugs kann bereits vor dem Einstieg in das Kraftfahrzeug ermöglicht werden. Für den Kraftfahrzeughersteller ergibt sich die Generierung neuer Geschäftsfelder mit einem hohen Umsatzpotential. Zum Beispiel parkende Kraftfahrzeuge können beliebige Passanten einer Benutzergruppe persönlich ansprechen und zum Beispiel Fragen beantworten oder zum Beispiel für Produkte werben. Hierzu kann beispielsweise auch ermöglicht werden, dass ein Halter des Fahrzeugs solchen Werbemaßnahmen zustimmen kann und dafür eine Leistung erhalten kann, beispielsweise einen Tankgutschein. Mit anderen Worten erfolgt eine auf die Person zugeschnittene Kommunikation zwischen dem Kraftfahrzeug und dieser Person.

Mit anderen Worten kann das Kraftfahrzeug auch als personalisierte Informationsmöglichkeit genutzt werden, und das Kraftfahrzeug wird dadurch "menschlicher". Einer ängstlichen Person, zum Beispiel einer Person, die beim Fahren oder in der Nähe des Kraftfahrzeugs ängstlich ist, kann hierdurch mehr Vertrauen in das Kraftfahrzeug gegeben werden. Dieser Aspekt ist vor allem bei pilotiert fahrenden Kraftfahrzeugen eine große Unterstützung für die Person. Dadurch, dass die Person beruhigt wird, wird schließlich eine Verkehrssicherheit erhöht.

Das erfindungsgemäße Verfahren zum Betreiben einer Schallausgabeeinrichtung und einer Lichtanlageeinrichtung eines Kraftfahrzeugs weist die folgenden, durch eine Sprachanalyse- und Steuereinrichtung durchgeführten Schritte auf. Die Lichtanlageeinrichtung weist einen oder mehrere Scheinwerfer und/oder Blinker auf. Die Schallausgabeeinrichtung kann dabei beispielsweise als Lautsprechersystem mit mehreren Außenlautsprechern ausgestaltet sein. Unter einer Sprachanalyse- und Steuereinrichtung wird ein Gerät oder eine Gerätekomponente, oder ein System mehrerer Gerätekomponenten, verstanden, das zur Sprachanalyse eingerichtet ist, sowie zum Empfangen von Signalen, deren Auswertung, und zum Erzeugen von Signalen, vorzugsweise Audiosignalen. Die Sprachanalyse- und Steuereinrichtung kann zum Beispiel als Steuergerät mit einer Sprachanalysesoftware ausgestaltet sein. Die Sprachanalyse- und Steuereinrichtung kann zum Beispiel eine Komponente des Kraftfahrzeugs sein und/oder eine Komponente einer kraftfahrzeugexternen Servereinrichtung.

Erfindungsgemäß erfolgt zunächst ein Empfangen eines Sprachsignals aus einer Spracherfassungseinrichtung, wobei das empfangene Sprachsignal eine durch die Spracherfassungseinrichtung erfasste Sprachnachricht einer Person, die sich in einer Außenumgebung des Kraftfahrzeugs befindet, beschreibt. Als Spracherfassungseinrichtung wird ein Gerät oder eine Gerätekomponente, oder ein Geräteverbund, verstanden, der zum Erfassen und/oder Erkennen von Sprache eingerichtet und ausgestaltet ist, und vorzugsweise eine Spracherfassungseinrichtung des Kraftfahrzeugs sein kann. Die Spracherfassungseinrichtung kann vorzugsweise als Schallwandler ausgestaltet sein, also zum Beispiel als Richtmikrofon. Das beispielhafte Richtmikrofon kann vorzugsweise an einer Außenseite des Kraftfahrzeugs angeordnet sein. Alternativ oder zusätzlich kann die Spracherfassungseinrichtung eine Kamera umfassen, die eine Außenumgebung des Kraftfahrzeugs filmen kann, und die zum Beispiel eine Steuereinheit mit einer Software zum Erkennen von Sprache anhand gefilmter Lippenbewegungen erfassen und erkennen kann.

Anhand des empfangenen Sprachsignals erfolgt ein Ermitteln eines Sprachnachrichteninhalts der erfassten Sprachnachricht und eines thematischen Kontexts der erfassten Sprachnachricht. Dies kann beispielsweise durch eine Sprachanalyse und/oder Spracherkennung und/oder eine Erkennung von Sprachmustern erfolgen. Die Sprachnachricht kann beispielsweise einen Gruß der Person oder eine Frage zu einem bestimmten Ort sein. Ein entsprechender thematischer Kontext kann dann beispielsweise ein Begrüßungsdialog sein, oder der Kontext einer Navigation zu dem Zielort kann eine Wegbeschreibung sein.

In Abhängigkeit von dem ermittelten thematischen Kontext und dem ermittelten Sprachnachrichteninhalt erfolgt ein Bereitstellen eines Sprachausgabesignals, das einen kontextbezogenen Antworttext zu der erfassten Sprachnachricht beschreibt. Der Antworttext kann beispielsweise eine Erwiderung des beispielhaften Grußes sein oder zum Beispiel die Information, dass das Kraftfahrzeug jetzt die Türen öffnet, oder zum Beispiel eine Wegbeschreibung zu dem von der Person gewünschten Ziel.

Es folgt ein Übertragen des bereitgestellten Sprachausgabesignals an die Schallausgabeeinrichtung zum Ausgeben des bereitgestellten Sprachausgabesignals an die Außenumgebung des Kraftfahrzeugs. Die Schallausgabeeinrichtung kann dann vorzugsweise das übertragene Sprachausgabesignal ausgeben und der Person kontextbezogen antworten. Mit anderen Worten wird die Person zum Beispiel begrüßt, oder die Person erhält eine Wegbeschreibung zu dem gewünschten Ziel.

Es ergeben sich die oben genannten Vorteile.

Eine erweiterte Kommunikation zwischen dem Kraftfahrzeug und der Person wird dadurch ermöglicht, dass zusätzlich zu dem Ausgeben des akustisch wahrnehmbaren Antworttextes eine optische Rückmeldung vom Kraftfahrzeug gegeben wird. Durch die Sprachanalyse- und Steuereinrichtung erfolgt hierzu ein Vorgeben der Lichtanlageeinrichtung des Kraftfahrzeugs, wobei als Lichtanlageeinrichtung ein Gerät oder eine Gerätegruppe zum Ausgeben von Licht verstanden wird. Durch die Sprachanalyse- und Steuereinrichtung erfolgt ein Übertragen eines bereitgestellten Lichtanlagesteuersignals, das ein Lichtmuster beschreibt, an die vorgegebene Lichtanlageeinrichtung zum Ausgeben des Lichtmusters durch den einen oder die mehreren Scheinwerfer und/oder Blinker. Das Lichtmuster kann beispielsweise ein mehrfaches Aufblinken der Scheinwerfer sein.

Das Lichtmustersignal wird durch die Sprachanalyse- und Steuereinrichtung in Abhängigkeit von dem ermittelten Sprachnachrichteninhalt und/oder in Abhängigkeit von dem ermittelten thematischen Kontext bereitgestellt. Dadurch wird die Kommunikation zwischen Kraftfahrzeug und Person um einen optischen Effekt erweitert und unterstützt.

Gemäß einer bevorzugten Ausführungsform des erfindungsgemäßen Verfahrens kann durch die Sprachanalyse- und Steuereinrichtung ein Erzeugen eines Kontextsignals erfolgen, wobei das Kontextsignal den ermittelten Sprachnachrichteninhalt beschreiben kann. Das erzeugte Kontextsignal kann dann an eine Deep-Learning-Engine übertragen werden.

Eine Deep-Learning-Engine ("Deep-Learning-Einrichtung") ist ein Gerät, eine Gerätekomponente oder ein Programm, welches so genanntes Deep-Learning (tiefgehendes Lernen, maschinelles Lernen) auf eine Vielzahl von Daten anwenden kann. Mit anderen Worten ist die Deep-Learning-Engine eine hochentwickelte Einrichtung zum Durchführen von tiefgehendem Lernen, also eine Umsetzung von künstlicher Intelligenz. Mit anderen Worten sind sowohl künstliche Intelligenz, als auch Maschinenlernen und tiefgehendes Lernen mittels der Deep-Learning-Engine umsetzbar. Die Deep-Learning-Engine kann beispielsweise als tiefgehendes, künstliches neuronales Netz ausgebildet oder ausgestaltet sein, also, mit anderen Worten, dazu eingerichtet sein, mittels einer Methode des maschinellen Lernens eine Vielzahl von Erfahrungswerten (also Trainingsdaten oder einem Dataset) nach einem vorbestimmten Algorithmus auswerten, beispielsweise über eine darin enthaltene Logik, zum Beispiel über eine Korrelation.

Die Trainingsdaten oder Erfahrungswerte können zum Beispiel als künstliches neuronales Netzwerk zusammengefasst sein, und beispielsweise aus einer Datenbank stammen, und vorgegebenen Antworttexten zugeordnet werden. Vorzugsweise können solche Daten zu den Sprachnachrichten und/oder thematischen Kontexten in einer Anzahl von größer 1000, insbesondere größer 10000, zum Trainieren der Deep-Learning-Engine verwendet werden. Ein solcher Datensatz kann auch als Big-Data-Datensatz bezeichnet werden.

Hierdurch können auch weitere logische Verknüpfungen in der Deep-Learning-Engine erstellt werden. Erfahrungswerte oder Trainingsdaten können dabei zum Beispiel zu einer Vielzahl von Sprachnachrichteninhalten und/oder thematischen Kontexten statistisch zusammengefasst werden und verschiedenen kontextbezogenen Antworttexten zugeordnet werden. Neue Sprachnachrichteninhalte und/oder thematische Kontexte können durch die Deep-Learning-Engine durch Aufbau neuer logischer Verknüpfungen aufbereitet werden, und es können Antworttexte generiert werden, die mit einer hohen Wahrscheinlichkeit kontextbezogene Antworten zu der neuen Sprachnachricht sind.

Durch die Sprachanalyse- und Steuereinrichtung erfolgt ein Betreiben der Deep-Learning-Engine, wobei die Deep-Learning-Engine entweder eine Komponente der Sprachanalyse- und Steuereinrichtung sein kann, oder baulich von der Sprachanalyse- und Steuereinrichtung getrennt sein und von der Sprachanalyse- und Steuereinrichtung ferngesteuert werden kann. Durch die Deep-Learning-Engine können zu einer Vielzahl von Sprachnachrichteninhalten und/oder thematischen Kontexten kontextbezogene Antworttexte statistisch zusammengefasst sein. Mittels der Deep-Learning-Engine erfolgt ein Verarbeiten des durch das erzeugte Kontextsignal beschriebenen Sprachnachrichteninhalts. Hierdurch erfolgt ein Ermitteln des kontextbezogenen Antworttextes, der mit einer vorbestimmten Wahrscheinlichkeit benutzerspezifisch und/oder situationsspezifisch eine kontextspezifische Antwort auf die Spracheingabe und für einen kontextspezifischen Dialog mit der Person geeignet sein kann.

Durch die Sprachanalyse- und Steuereinrichtung erfolgt das Bereitstellen des Sprachausgabesignals dann durch Erzeugen des Sprachausgabesignals, das den ermittelten, kontextbezogenen Antworttext beschreibt.

Durch diese Ausführungsform der erfindungsgemäßen Verfahrens kann der Dialog zwischen Kraftfahrzeug und Person, also die Kommunikation mit dem Kraftfahrzeug, noch kontextbezogener sein, also noch benutzerspezifischer und/oder situationsspezifischer. Die oben genannten Vorteile werden dadurch synergistisch verstärkt.

Eine besonders benutzerspezifische Kommunikation kann durch eine weitere Ausführungsform des erfindungsgemäßen Verfahrens ermöglicht werden, bei der die Sprachanalyse- und Steuereinrichtung ein Feststellen einer Identität der Person durchführt, vorzugsweise anhand der erfassten Sprachnachricht. Hierzu kann zum Beispiel eine Stimme der Person erfasst und erkannt werden und/oder ein Sprachmuster und/oder Verhaltensdaten der Person können ermittelt werden. Das Ermitteln des thematischen Kontexts der erfassten Sprachnachricht kann dann anhand der festgestellten Identität erfolgen.

In einer Weiterbildung kann die Benutzerspezifität erhöht werden, indem eine Berechtigung der Person zum Benutzen des Kraftfahrzeugs, also beispielsweise zum Kommunizieren mit dem Kraftfahrzeug, berücksichtigt wird. Dieser Aspekt ist insbesondere dann interessant, falls zum Beispiel ein Halter des Kraftfahrzeugs nur unter bestimmten Bedingungen möchte, dass sein Fahrzeug mit ihm oder anderen Personen kommuniziert, oder falls nur Personen eines bestimmten Berechtigungskreises die Funktion der Sprachanalyse- und Steuereinrichtung nutzen dürfen. Eine solche Benutzergruppe kann beispielsweise eine Personengruppe sein, bei der diejenigen Mitglieder ein Benutzerkonto beim Hersteller des Kraftfahrzeugs aufweisen, optional wobei alle Mitglieder der Personengruppe Kunde eines Kraftfahrzeugherstellers sind.

Anhand der festgestellten Identität der Person erfolgt gemäß dieser Weiterbildung durch die Sprachanalyse- und Steuereinrichtung ein Prüfen, ob die festgestellte Identität eine vorgegebene Benutzungsbedingung erfüllt. Die vorgegebene Benutzungsbedingung kann dabei ein Vorliegen einer Berechtigung der Person zum Benutzen des Kraftfahrzeugs vorschreiben. Eine solche Berechtigung kann beispielsweise in der Sprachanalyse- und Steuereinrichtung gespeichert oder beispielsweise in einem Benutzerprofil der Person abgelegt sein, wobei die Sprachanalyse- und Steuereinrichtung das Benutzerprofil zum Beispiel von einem kraftfahrzeugexternen Datenserver abrufen kann. Das Bereitstellen des Sprachausgabesignals und/oder das Übertragen des bereitgestellten Sprachausgabesignals erfolgen gemäß dieser Weiterbildung nur dann, falls die vorgegebene Benutzungsbedingung erfüllt ist.

Vorzugsweise kann bei der genannten Weiterbildung vorgesehen sein, dass die Sprachanalyse- und Steuereinrichtung anhand der festgestellten Identität der Person ein Überprüfen eines auf einer Speichereinrichtung gespeicherten Benutzerprofils der Person durchführt, um zu prüfen, ob die Berechtigung vorliegt.

Für eine besonders individuelle Kommunikation mit der Person kann, gemäß einer bevorzugten Ausführungsform des erfindungsgemäßen Verfahrens, die Sprachanalyse- und Steuereinrichtung ein Feststellen einer relativen Position der Person zum Kraftfahrzeug durchführen. In Abhängigkeit von der festgestellten relativen Position der Person kann ein Feststellen eines Lautsprechers erfolgen, der ein vorgegebenes Ausrichtungskriterium erfüllt. Das vorgegebene Ausrichtungskriterium kann dabei eine Ausrichtung des Lautsprechers zu der Person hin vorgeben. Mit anderen Worten kann das Ausrichtungskriteriums vorgeben, dass der Lautsprecher derart am Kraftfahrzeug angeordnet ist, dass eine Schallausgabe des Lautsprechers in die Richtung der festgestellten relativen Position der Person erfolgt. Dabei kann das erzeugte Sprachausgabesignal den festgestellten Lautsprecher zum Ausgeben des bereitgestellten Sprachausgabesignals vorgeben.

Durch diese Verfahrensvariante wird ermöglicht, dass das Kraftfahrzeug gleichzeitig mit mehreren Personen kommunizieren kann, beispielsweise über einen Lautsprecher vorne links am Kraftfahrzeug mit einer weiteren Person, die vorne links am Kraftfahrzeug steht, sowie mit einer Person, die am Kofferraum des Kraftfahrzeugs stehen kann, über zum Beispiel einen Lautsprecher, der unter dem Kofferraum angeordnet sein kann.

Optional kann hierbei vorgesehen sein, dass die Sprachanalyse- und Steuereinrichtung den Lautsprecher aus einer Mehrzahl von Lautsprechern der Schallausgabeeinrichtung auswählt.

Das Feststellen der relativen Position der Person kann beispielsweise über einen Vergleich von geografischen Koordinaten des Kraftfahrzeugs und der Person erfolgen, wobei die geografischen Koordinaten der Person beispielsweise aus einen mobilen Endgerät der Person empfangen werden können. Alternativ oder zusätzlich kann das Feststellen der relativen Position mittels geeigneter Kraftfahrzeugsensoren durchgeführt werden, beispielsweise mit Hilfe von Näherungssensoren, die an der Außenseite des Kraftfahrzeugs angeordnet sein können.

Zur Unterstützung der Person auf dem Weg zu einem Ziel, kann, gemäß einer weiteren Ausführungsform des erfindungsgemäßen Verfahrens, die Sprachanalyse- und Steuereinrichtung anhand des ermittelten Sprachnachrichteninhalts ein Ermitteln eines Zielorts der Person durchführen. Beispielsweise durch Sprachanalyse kann der gesprochene Text der Person, also die Sprachnachricht, auf zum Beispiel einen Städtenamen untersucht werden, einen Eigennamen eines Orts oder einer Bezeichnung eines Orts, beispielsweise die Bezeichnung "Restaurant". Beispielsweise mit Hilfe einer Navigationssoftware und/oder einer Internetrecherche können dann beispielsweise alle Restaurants in der Umgebung ermittelt werden, und zum Beispiel eines der Restaurants als Zielort festgelegt werden.

Es erfolgt ein Ermitteln einer Route von einem aktuellen Standort der Person und/oder von einem aktuellen Standort des Kraftfahrzeugs zu dem ermittelten Zielort. Die Aufgabe des Ermittelns der Route kann beispielsweise einem Navigationsgerät übertragen werden, oder von der Sprachanalyse- und Steuereinrichtung mit zum Beispiel einer Navigationssoftware durchgeführt werden. Bei dieser Ausführungsform des erfindungsgemäßen Verfahrens kann der kontextbezogene Antworttext eine Wegbeschreibung von dem aktuellen Standort der Person und/oder von dem aktuellen Standort des Kraftfahrzeugs zu dem ermittelten Zielort entlang der ermittelten Route umfassen.

Das Lichtmustersignal kann vorzugsweise in Abhängigkeit von einer durch eine Sensoreinrichtung des Kraftfahrzeugs erfassten Blickrichtung der Person bereitgestellt werden. So kann beispielsweise die Person erkennen, welches Kraftfahrzeug gerade mit ihr kommuniziert, falls zum Beispiel mehrere Kraftfahrzeuge in ihrer Nähe stehen.

In einer Umgebung mit einer störenden Geräuschkulisse, oder falls zum Beispiel die Person nicht sehr nahe an dem Kraftfahrzeug steht, kann unter Umständen eine kraftfahrzeuginterne Spracherfassungseinrichtung die Sprachnachricht nicht sehr gut oder sogar unvollständig erfassen. Um auch in solchen Situationen eine besonders hohe Qualität der kontextbezogenen Antwort zu ermöglichen, kann die Sprachanalyse- und Steuereinrichtung gemäß einer weiteren Ausführungsform des erfindungsgemäßen Verfahrens das Sprachsignal aus einer Spracherfassungseinrichtung des Kraftfahrzeugs empfangen, und zusätzlich ein weiteres Sprachsignal, das eine von der kraftfahrzeugexternen Spracherfassungseinrichtung erfasste Sprachnachricht beschreibt, aus einer weiteren, kraftfahrzeugexternen Spracherfassungseinrichtung empfangen. Die kraftfahrzeugexterne Spracherfassungseinrichtung kann vorzugsweise eine Spracherfassungseinrichtung eines mobilen Endgeräts sein, zum Beispiel eine Spracherfassungseinrichtung aus einer Smartwatch der Person oder einem Smartphone der Person. Alternativ kann die kraftfahrzeugexternen Spracherfassungseinrichtung an oder in der Person angeordnet sein, und zum Beispiel als implantierter Chip ausgestaltet sein.

Es folgt, durch die Sprachanalyse- und Steuereinrichtung, ein Ermitteln, welche der Sprachnachrichten eine bessere Qualität aufweist als die andere der Sprachnachrichten, wobei das Ermitteln des Sprachnachrichteninhalts und des thematischen Kontexts anhand derjenigen Sprachnachricht erfolgt, die die bessere Qualität aufweist, und wobei das Bereitstellen des Sprachausgabesignals anhand der Sprachnachricht ermittelten Sprachnachricht mit der besseren Qualität und dem entsprechenden thematischen Kontext erfolgt.

Die oben gestellte Aufgabe wird gelöst durch eine Sprachanalyse- und Steuereinrichtung, die dazu eingerichtet ist, die eine Sprachanalyse- und Steuereinrichtung betreffenden Verfahrensschritte gemäß einem der oben beschriebenen Ausführungsformen des erfindungsgemäßen Verfahrens durchzuführen. Die Sprachanalyse- und Steuereinrichtung kann beispielsweise als Steuerplatine oder Steuerchip oder Software ausgestaltet sein. Vorzugsweise kann die Sprachanalyse- und Steuereinrichtung eine Prozessoreinrichtung aufweisen, die dazu eingerichtet ist, die Sprachanalyse- und Steuereinrichtung zum Durchführen der betreffenden Verfahrensschritte zu veranlassen. Unter einer Prozessoreinrichtung wird dabei ein Gerät oder eine Gerätekomponente oder eine Bauteilgruppe zur elektronischen Datenverarbeitung verstanden, die vorzugsweise mindestens einen Mikrocontroller und/oder mindestens einen Mikroprozessor aufweisen kann. Optional kann eine Speichereinrichtung vorgesehen sein, also ein Bauteil oder eine Komponente zum Speichern von Daten, wobei die Speichereinrichtung zum Beispiel als Speicherkarte oder als Festplatte oder Speicherchip ausgestaltet sein kann. Auf der Speichereinrichtung kann ein Programmcode abgelegt sein, der bei Ausführen durch die Prozessoreinrichtung die Sprachanalyse- und Steuereinrichtung dazu veranlasst, das erfindungsgemäße Verfahren durchzuführen.

Die oben gestellte Aufgabe wird gelöst durch ein Kraftfahrzeug, das eine Schallausgabeeinrichtung und einer Lichtanlageeinrichtung aufweist, wobei die Schallausgabeeinrichtung dazu ausgestaltet ist, ein Sprachausgabesignal, also ein Audiosignal, an eine Außenumgebung des Kraftfahrzeugs auszugeben. Die Lichtanlageeinrichtung weist einen (oder mehrere) Scheinwerfer und/oder Blinker auf. Das Kraftfahrzeug, das vorzugsweise als Kraftwagen ausgestaltet sein kann, zum Beispiel als Personenkraftwagen, weist eine Ausführungsform der erfindungsgemäßen Sprachanalyse- und Steuereinrichtung auf.

Die oben gestellt Aufgabe wird ebenfalls gelöst, falls die Sprachanalyse- und Steuereinrichtung eine Komponente einer kraftfahrzeugexternen Servereinrichtung ist. Unter einer Servereinrichtung wird zum Beispiel ein Datenserver, ein Computer, ein Computerverbund, oder zum Beispiel eine Daten-Cloud verstanden. Die erfindungsgemäße, kraftfahrzeugexterne Servereinrichtung weist entsprechend eine Ausführungsform der erfindungsgemäßen Sprachanalyse- und Steuereinrichtung auf. Vorzugsweise kann die kraftfahrzeugexterne Servereinrichtung zum Betreiben im Internet ausgestaltet sein.

Die Erfindung umfasst auch die Kombinationen der Merkmale der beschriebenen Ausführungsformen.

Im Folgenden sind Ausführungsbeispiele der Erfindung beschrieben. Hierzu zeigen:
- Fig. 1: eine schematische Darstellung zu einem Ausführungsbeispiel des erfindungsgemäßen Verfahrens und zu den erfindungsgemäßen Vorrichtungen; und
- Fig. 2: eine schematische Darstellung zu einem weiteren Ausführungsbeispiel des erfindungsgemäßen Kraftfahrzeugs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

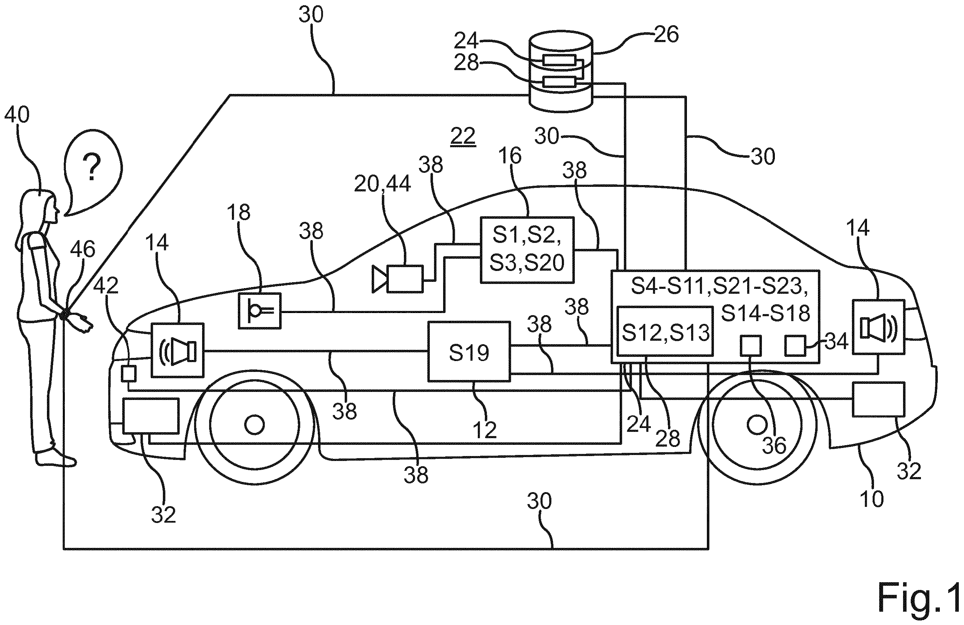

Die Fig. veranschaulichen das Prinzip des erfindungsgemäßen Verfahrens anhand eines Ausführungsbeispiel. Hierzu zeigt die Fig. 1 ein Kraftfahrzeug 10, beispielsweise einen Personenkraftwagen, das vorzugsweise in einem pilotierten Fahrmodus betrieben werden kann. Das Kraftfahrzeug 10 weist eine Schallausgabeeinrichtung 12 auf, die dazu eingerichtet ist, ein Audiosignal auszugeben. Die Schallausgabeeinrichtung 12 kann beispielsweise als Infotainmentsystem oder Lautsprechersystem mit einem oder mehreren Lautsprechern 14 ausgestaltet sein.

Einer der beispielhaften Lautsprecher 14 kann an einer Rückseite der Außenseite des Kraftfahrzeugs 10 angeordnet sein, und ein weiterer Lautsprecher 14 der Schallausgabeeinrichtung 12 kann an einer vorderen Seite des Kraftfahrzeugs 10 angeordnet sein, beispielsweise an einer Außenseite des Kraftfahrzeugs 10 unter dem linken Scheinwerfer. Ein weiterer, optionaler Lautsprecher 14 (in der Fig. 1 nicht gezeigt) kann zum Beispiel unterhalb des rechten Scheinwerfers angeordnet sein.

Eine Spracherfassungseinrichtung 16 des Kraftfahrzeugs kann zum Beispiel ein Mikrofon 18 und/oder eine Kamera 20 aufweisen. Vorzugsweise kann die Spracherfassungseinrichtung 16 mehrere Mikrofone 18 und/oder mehrere Kameras 20 aufweisen, die zum Beispiel jeweils an der Außenseite des Kraftfahrzeugs 10 angeordnet und in verschiedene Richtungen ausgerichtet sein können. Im Beispiel der Fig. 1 sind, aus Gründen der Übersichtlichkeit, nur ein Mikrofon 18 und eine Kamera 20 gezeigt, die jeweils nach vorne ausgerichtet sein können. Die Kamera kann zum Beispiel an einem Dachhimmel des Kraftfahrzeugs 10 angeordnet sein und durch eine Windschutzscheibe hindurch die Außenumgebung 22 des Kraftfahrzeugs 10 filmen. Das in der Fig. 1 gezeigte Mikrofon 18 kann zum Beispiel als Richtmikrofon ausgestaltet und ebenfalls an der Außenseite des Kraftfahrzeugs 10 angeordnet sein, beispielsweise neben oder an einem der Lautsprecher 14, oder zum Beispiel in der Mitte eines Kühlers des Kraftfahrzeugs 10.

Die Spracherfassungseinrichtung 16 kann zum Beispiel eine Software zum Auswerten des Kamerabildes aufweisen, die mithilfe eines geeigneten Algorithmus zum Beispiel über eine Labialbewegungserkennung Lippenbewegungen erfassen und diese in einem Sprachsignal beschreiben kann.

Die Fig. 1 zeigt eine Sprachanalyse- und Steuereinrichtung 24 des Kraftfahrzeugs, die alternativ eine Komponente einer kraftfahrzeugexternen Servereinrichtung 26 sein kann. Bei der kraftfahrzeugexternen Servereinrichtung 26 kann es sich zum Beispiel um eine Daten-Wolke ("Daten-Cloud") handeln, oder beispielsweise um einen Datenserver oder Datenserververbund. Alternativ kann die Sprachanalyse- und Steuereinrichtung 24 Komponenten der Servereinrichtung 26 und des Kraftfahrzeugs 10 umfassen.

Die Sprachanalyse- und Steuereinrichtung 24 kann zum Beispiel als Steuerplatine oder Steuergerät ausgestaltet sein. Die Fig. 1 zeigt eine Variante, in der die Sprachanalyse- und Steuereinrichtung 24 eine Deep-Learning-Engine 28 aufweisen kann. Alternativ kann die Deep-Learning-Engine 28 eine Komponente der Servereinrichtung 26 sein, die von der Sprachanalyse- und Steuereinrichtung 24 des Kraftfahrzeugs 10 ferngesteuert werden kann. Eine solche Fernsteuerung kann über eine Datenkommunikationsverbindung 30 erfolgen, beispielsweise über eine Mobilfunkverbindung oder eine Internetverbindung. Alternativ kann die Sprachanalyse- und Steuereinrichtung 24 in der Servereinrichtung 26 verortet sein, und die Deep-Learning-Engine aufweisen.

Die Deep-Learning-Engine 28 kann vorzugsweise als künstliches, neuronales Netzwerk ausgebildet sein, welches anhand von Erfahrungswerten oder Trainingsdaten, die zum Beispiel Sprachmuster und/oder vorgegebene Sprachinhalte umfassen können, darauf trainiert wurde, in Abhängigkeit von einem Sprachnachrichteninhalt einen kontextbezogenen Antworttext zu ermitteln und/oder zu generieren. In einem solchen Lernprozess kann beispielsweise eine Vielzahl von Sprachnachrichteninhalten mittels einer Clusteranalyse ausgewertet und somit Eingangspunkte und Ausgangspunkte des neuronalen Netzwerkes gebildet werden. Eine derart angelernte Deep-Learning-Engine 28 kann dann benutzt werden, um situationsbezogen neue Sprachnachrichteninhalte auszuwerten und jeweils einen kontextbezogenen Antworttext zur Verfügung zu stellen. Als Ausgangspunkt oder Ausgangswert kann der Antworttext zum Beispiel generiert werden, der zum Beispiel mit einer vorgegebenen Mindestwahrscheinlichkeit eine situationsbezogene und/oder benutzerspezifische Antwort ist, um einen kontextbezogenen Dialog mit der Person zu führen.

Als beispielhafte Lichtanlageeinrichtung 32 des Kraftfahrzeugs 10 zeigt die Fig. 1 beispielhaft ein System aus zum Beispiel Scheinwerfern an einer Kraftfahrzeugfront und zum Beispiel einem oder mehreren Bildschirmen an einem Kraftfahrzeugheck. Die Sprachanalyse- und Steuereinrichtung 24 kann optional eine Prozessoreinrichtung 34 aufweisen, die zum Beispiel mehrere Mikroprozessoren aufweisen kann. Zusätzlich oder alternativ kann die Sprachanalyse- und Steuereinrichtung 24 eine Speichereinrichtung 36 aufweisen, die zum Beispiel als Steuerchip ausgestaltet sein kann. In der Fig. 1 sind diese beiden optionalen Komponente, aus Gründen der Übersichtlichkeit, nicht in der optionalen Sprachanalyse- und Steuereinrichtung 24 der kraftfahrzeugexternen Servereinrichtung 26 gezeigt, jedoch kann die Sprachanalyse- und Steuereinrichtung 24 der Servereinrichtung 26 analog zu derjenigen des Kraftfahrzeugs 10 ausgestaltet und eingerichtet sein. Im Folgenden werden die Verfahrensschritte beispielhaft für die Sprachanalyse- und Steuereinrichtung 24 des Kraftfahrzeugs 10 erklärt, wobei in der Alternative der Anordnung der Sprachanalyse- und Steuereinrichtung 24 in der Servereinrichtung 26 analog die gleichen Verfahrensschritte ausgeführt werden können.

Die einzelnen Komponenten des Kraftfahrzeugs 10 können untereinander durch drahtgebundene und/oder drahtlose Datenkommunikationsverbindungen 38 miteinander verbunden sein. Als drahtgebundene Datenkommunikationsverbindungen 38 können diese beispielsweise als Daten-bus des Kraftfahrzeugs 10 ausgestaltet sein, beispielsweise als CAN-bus. Beispielhafte drahtlose Datenkommunikationsverbindungen 38 sind zum Beispiel eine WLAN-Verbindung oder eine Bluetooth-LE-Verbindung.

Im Beispiel der Fig. 1 kann das Kraftfahrzeug 10 beispielsweise ein fahrendes oder parkendes, pilotiertes Kraftfahrzeug 10 sein. Eine Person 40, beispielsweise ein Fußgänger, kann beispielsweise von vorne links an das Kraftfahrzeug 10 herantreten. Die Person 40 kann beispielsweise in einem Abstand von zwei Metern zu dem Kraftfahrzeug 10 stehen und zum Beispiel die Frage stellen: "Wo ist das nächste Restaurant?", oder einfach das Kraftfahrzeug 10 begrüßen: "Guten Morgen."

Diese Sprachnachricht, im Beispiel der Fig. 1 zum Beispiel die Frage nach dem Restaurant, kann in dem optionalen Verfahrensschritt S1 durch die Spracherfassungseinrichtung 16 erfasst werden. Hierzu kann beispielsweise das optionale Mikrofon 18 an der Vorderseite des Kraftfahrzeugs die Sprachnachricht aufnehmen. Alternativ oder zusätzlich kann die beispielhafte Kamera 20 das Gesicht der Person 40 filmen, und dabei die Lippenbewegung beim Aussprechen der Frage aufnehmen. Die Spracherfassungseinrichtung 16 kann der Sprachanalyse- und Steuereinrichtung 24 ein entsprechendes Sprachsignal aus der Kamera 20 und/oder dem Mikrofon 18 bereitstellen (S2), in dem zum Beispiel das beispielhafte Signal aus dem Mikrofon 18 an die Sprachanalyse- und Steuereinrichtung 24 übertragen werden kann (S3), oder indem zum Beispiel anhand des beispielhaften Signals aus der Kamera 20 eine Lippenbewegungserkennung (Labialbewegungserkennung) durchgeführt werden kann. Anhand der erfassten Lippenbewegung kann dann der Text der Sprachnachricht abgeleitet werden. Hierzu stehen dem Stand der Technik bekannte Methoden und Algorithmen zur Verfügung. Im optionalen Verfahrensschritt S2 kann die Spracherfassungseinrichtung 16 das Sprachsignal erzeugen und an die Sprachanalyse- und Steuereinrichtung 24 übertragen (S3). Das Sprachsignal aus der Spracherfassungseinrichtung 16 wird dann durch die Sprachanalyse- und Steuereinrichtung 24 empfangen (S4).

Alternativ kann die Sprachnachricht auch aus einem mobilen Endgerät der Person 40 empfangen werden (S4), wobei die Spracherfassungseinrichtung 16 zur Kommunikation mit dem mobilen Endgerät ausgelegt sein kann.

Vorzugsweise kann vorgesehen sein, dass die Sprachanalyse- und Steuereinrichtung 24 nur bei einer vorliegenden Berechtigung der Person 40 mit dieser kommuniziert. Eine in der Speichereinrichtung 36 vorgegebene Nutzungsbedingung kann beispielsweise vorschreiben, dass die Kommunikation mit der Person 40 nur dann erfolgt, falls diese zum Beispiel eine Mitglied einer so genannten "Community" oder "Online-Community" ist, also einer organisierten Gruppe von Mitgliedern, die im Internet miteinander kommunizieren und teilweise in einem virtuellen Raum interagieren, oder andersartig ein soziales Netzwerk bilden. Ein beispielhaftes soziales Netzwerk kann ein Netzwerk von Kunden eines bestimmten Kraftfahrzeugherstellers sein. Um Mitglied bei einem solchen Netzwerk zu sein, kann beispielsweise vorgesehen sein, dass die Person 40 ein Benutzerprofil hat, das auf der kraftfahrzeugexternen Servereinrichtung 26 abgelegt sein kann, und dass die Person 40 und/oder zum Beispiel ein Fahrzeughalter des Kraftfahrzeugs 10 über ein solches, jeweiliges Benutzerprofil eine Berechtigung zur Kommunikation zwischen Kraftfahrzeug 10 und der Person 40 zugestimmt haben.

In einem beispielhaften Benutzerprofil kann beispielsweise ein aktueller Standort der Person 40 gespeichert sein. Zum Nutzen des Kommunikationsservices des Kraftfahrzeugs 10 kann beispielsweise vorgesehen sein, dass sich die Person 40 zunächst im Benutzerprofil anmelden soll. Alternativ oder zusätzlich kann zum Beispiel ein Halter des Kraftfahrzeugs 10 über dessen Benutzerprofil Rechte freigeben, in denen genau festgelegt sein kann, welche Personen den Kommunikationsservice des Kraftfahrzeugs 10 nutzen dürfen. Optional kann von einem Halter des Kraftfahrzeugs 10 auch freigegeben werden, welche Informationen, also auch welcher Kommunikationsinhalt, als kontextbezogener Antworttext verwendet werden kann. Erklärt sich der beispielhafte Halter des Kraftfahrzeugs 10 beispielsweise bereit, dass über sein Kraftfahrzeug 10 auch kontextbezogene Werbung ausgegeben werden kann, kann beispielsweise vorgesehen sein, dass er als Belohnung einen Geldbetrag erhalten kann, beispielsweise von einem Kraftfahrzeughersteller, der eine Plattform für die Community bereitstellt.

Das Feststellen der Identität der Person 40 (S5) kann beispielsweise durch Ermitteln von Verhaltensdaten erfolgen, wobei beispielsweise eine Körperhaltung und/oder ein Parameter einer Stimme der Person 40 und/oder ein Sprachmuster der Sprachnachricht analysiert werden. Hierzu können Daten der beispielhaften Kamera 20 und/oder des beispielhaften Mikrofones 18 genutzt werden. Alternativ oder zusätzlich können beispielsweise über eine Mobilfunkverbindung oder eine Internetverbindung Daten von einem mobilen Endgerät der Person 40 abgerufen und/oder empfangen werden, die Aufschluss über die Identität der Person 40 geben können. Eine solche Verbindung zwischen einem mobilen Endgerät, beispielsweise einem Smartphone oder Laptop und dem Kraftfahrzeug 10 kann beispielsweise über eine WLAN- oder Nahfeldkommunikationsverbindung erfolgen. Alternativ kann beispielsweise eine Gesichtserkennung anhand des Kamerabildes erfolgen. Für die Gesichtserkennung und das Feststellen der Identität (S5) kann beispielsweise ein Referenzfoto der Person 40 in der Speichereinrichtung 36 abgelegt sein, um dieses mit einem aktuellen Kamerabild zu vergleichen.

Ein weiteres, optionales Identifizierungsmittel kann beispielsweise ein implantierter Chip sein. Das Identifizieren der Person 40 (S5), kann vorzugsweise eine zwei-Faktoren-Identifikation sein, das heißt die Identität kann in zwei aufeinanderfolgenden Identifizierungsschritten festgestellt werden.

Zum Prüfen der Berechtigung der Person 40 (S6) kann beispielsweise anhand der festgestellten Identität das Benutzerprofil der Person 40 aufgerufen und auf die Benutzerberechtigung geprüft werden, oder eine entsprechende Information kann zum Beispiel in der Speichereinrichtung 36 hinterlegt sein. Im Beispiel der Fig. 1 kann eine solche Berechtigung vorliegen.

Optional kann vorgesehen sein, dass beispielsweise mittels einer Standortinformation des mobilen Endgeräts der Person 40 oder beispielsweise durch einen Sensor des Kraftfahrzeugs 10 die relative Position der Person 40 festgestellt wird (S7), im Beispiel der Fig. 1 die Position am linken, vorderen Scheinwerfer. Hierzu kann das Kraftfahrzeug 10 beispielsweise an der Außenseite und an mehreren Stellen um das Kraftfahrzeug 10 herum mehrere Sensoren 42 aufweisen, beispielsweise Näherungssensoren. Alternativ oder zusätzlich kann die relative Position beispielsweise über das Kamerasignal ermittelt werden, oder anhand des aus dem beispielhaften Mikrofon 18 empfangenen Sprachsignals, in dem die Spracherfassungseinrichtung 16 oder die Sprachanalyse- und Steuereinrichtung 24 ermittelt, aus welchem der beispielhaften Richtmikrofone 18 die Sprachnachricht erfasst wird oder wurde. Weist die Schallausgabeeinrichtung 12 mehrere Lautsprecher 14 auf, so kann für die Ausgabe des Sprachausgabesignals zum Beispiel ein Lautsprecher 14 an der linken, vorderen Ecke des Kraftfahrzeugs 10 vorgegeben werden.

Anhand des empfangenen Sprachsignals ermittelt die Sprachanalyse- und Steuereinrichtung 24 einen Sprachnachrichteninhalt (S8), beispielsweise durch eine Textanalyse. Geeignete Techniken und Algorithmen sind dem Fachmann aus dem Stand der Technik bekannt. Es erfolgt zusätzlich ein Ermitteln eines thematischen Kontextes (S9), im Beispiel der Fig. 1 beispielsweise der Kontext einer Anfrage zu einer Restaurantsuche mit Navigation. Vorzugsweise kann das Ermitteln des thematischen Kontextes S9 in Abhängigkeit von dem ermittelten Sprachnachrichteninhalt erfolgen. Optional kann bei der Ermittlung des Kontextes S9 über zum Beispiel eine Stimmanalyse eine Stimmung der Person 40 erkannt werden, von der zum Beispiel eine Formulierung des später bereitgestellten Antworttextes abhängen kann.

Wird optional zusätzlich ein Sprachsignal aus einem mobilen Endgerät 46 empfangen, beispielsweise aus einer Smartwatch der Person 40, kann mit dem Fachmann aus dem Stand der Technik bekannten Methoden ermittelt werden, welche der Sprachnachrichten eine bessere Qualität aufweist als die andere der Sprachnachrichten.

Betreibt die Sprachanalyse- und Steuereinrichtung 24 die Deep-Learning-Engine 28, so kann der ermittelte Sprachnachrichteninhalt mittels eines durch die Sprachanalyse- und Steuereinrichtung 24 erzeugtes (S10) Kontextsignal an die Deep-Learning-Engine 28 übertragen werden. Beim Betreiben der Deep-Learning-Engine 28 (S11) kann der Sprachnachrichteninhalt durch diese verarbeitet werden (S12) und hierdurch der kontextbezogene Antworttext ermittelt werden (S13).

Im Beispiel der Frage nach dem Restaurant kann beispielsweise der Begriff "Restaurant" als Zielort ermittelt werden (S14), und, beispielsweise in Zusammenarbeit mit einem Navigationsgerät (in der Fig. 1 nicht gezeigt), kann eine Route von dem Standort der Person 40 und dem Kraftfahrzeug 10 zu einem so genannten "Point of interest", also einem Geopunkt von besonderem Interesse, der Kategorie "Restaurant" ermittelt werden (S15). Die zuletzt genannten Schritte können vorzugsweise durch die Sprachanalyse- und Steuereinrichtung 24 durchgeführt werden. Die Sprachanalyse- und Steuereinrichtung 24 und/oder die Deep-Learning-Engine 28 können als kontextbezogener Antworttext die Wegbeschreibung ermitteln (S16) und dadurch formulieren.

In einer besonders benutzerspezifischen Variante kann hierbei auch die festgestellte Identität der Person 40 berücksichtigt werden. Handelt es sich bei der Person 40 beispielsweise um eine Person, die zum Beispiel als bekannte Person oder als Fahrzeughalter hinterlegt wurde, kann der Antworttext besonders persönlich formuliert werden, beispielsweise mit einer persönlichen Anrede, einer Anrede in der Höflichkeitsform oder es kann zum Beispiel ein besonders bevorzugtes Restaurant der Person 40 mit der festgestellten Identität als Zielort gewählt werden.

Zum Ausgeben des ermittelten Antworttextes wird ein Sprachausgabesignal bereitgestellt (S17), das den kontextbezogenen Antworttext beschreibt und ein Audiosignal ist. Das bereitgestellte Sprachausgabesignal kann dann an die Schallausgabeeinrichtung 12 übertragen werden (S18).

Hängt die Kommunikation zwischen dem Kraftfahrzeug 10 und der Person 40 von der Berechtigung der Person 40 ab, so kann in Abhängigkeit von dem oben beschriebenen Prüfungsschritt, ob die festgestellte Identität die vorgegebene Benutzungsbedingung erfüllt (S6), darüber entschieden werden, ob das Sprachausgabesignal bereitgestellt wird (S17), und/oder ob das bereitgestellte Sprachausgabesignal übertragen wird (S18).

Im Beispiel der Fig. 1 kann das Ausgeben des Sprachausgabesignals (S19) zum Beispiel nur über den Lautsprecher 14 vorne links erfolgen, wo die Person 40 steht. Über beispielsweise den weiteren Lautsprecher 14, der sich zum Beispiel hinten rechts an der Außenseite des Kraftfahrzeugs 10 befinden kann, kann das Kraftfahrzeug 10 dann zum Beispiel mit einer weiteren Person 40 einen anderen Dialog, mit zum Beispiel einem anderen thematischen Kontext, führen. Ist die optionale Blickrichtungserkennung vorgesehen, die zum Beispiel durch eine Sensoreinrichtung 44 des Kraftfahrzeugs durchgeführt werden kann. Als Sensoreinrichtung 44 wird ein Gerät oder eine Gerätekomponente zum Erfassen der Umgebung des Kraftfahrzeugs 10 verstanden. Die beispielhafte optionale Sensoreinrichtung 44 kann beispielsweise als Sensor die Kamera 20 aufweisen und hierdurch beispielsweise eine Augenposition der Person 40 filmen und damit eine Blickrichtung der Person 40 erfassen (S20). Die Sensoreinrichtung 44 kann dabei beispielsweise die Spracherfassungseinrichtung 16 umfassen. Wird beispielsweise erfasst (S20), dass der Benutzer gerade nicht zu dem Kraftfahrzeug 10 schaut, so kann ein Lichtmustersignal bereitgestellt werden (S21), das zum Beispiel ein Aufblinken aller Blinker oder ein Flackern der Scheinwerfer beschreiben kann. Die Person 40 kann somit darauf aufmerksam gemacht werden, dass dieses Kraftfahrzeug 10 gerade mit ihm kommuniziert. Befinden sich in der Nähe der Person 40 gerade weitere Kraftfahrzeuge, so kann die Person 40 schnell erkennen, welches Kraftfahrzeug 10 mit ihr kommuniziert.

Zusätzlich ist das Lichtmustersignal abhängig von dem ermittelten Sprachnachrichteninhalt und/oder von dem ermittelten thematischen Kontext bereitgestellt werden (S21), wobei beispielsweise bei einer Begrüßung als kontextbezogener Antworttext ein wechselseitiges Aufblinken der Blinkeranlage vorgesehen sein kann. Das Vorgeben der Lichtanlageeinrichtung (S22), kann beispielsweise durch eine situationsspezifische und/oder benutzerspezifische Vorgabe festgelegt sein, die zum Beispiel in der Speichereinrichtung 36 abgelegt sein kann. Das bereitgestellte Lichtmustersignal kann an die Lichtanlageeinrichtung 32 übertragen werden, sodass zum Beispiel das Lichtmuster und die Sprachausgabe synchron erfolgen.

In anderen als der oben beschriebenen Situation kann der kontextbezogene Antworttext beispielsweise eine Antwort auf eine Frage nach einer Einkaufsmöglichkeit in der Nähe sein. Der Antworttext kann beispielsweise lauten "Ich habe gerade im Internet nach Laptop gesucht, und es gibt in der Nähe ein Geschäft, das ein passendes Laptop für Sie verkauft.", und/oder zum Beispiel: "In dem Geschäft in Ihrer Nähe gibt es gerade ein besonders gutes Angebot.". Die Person 40 kann also fremde Kraftfahrzeuge 10 als Informationsquelle nutzen, und das Kraftfahrzeug 10 kann so auch als Werbemaßnahme verwendet werden.

Ist die Person 40 beispielsweise kein Fußgänger, sondern beispielsweise ein Fahrer eines anderen Kraftfahrzeugs (in der Fig. 1 nicht gezeigt), und hat sich die Person 40 beispielsweise danach erkundigt, ob es in dieser Stadt etwas besonders zu sehen gibt, kann der Antworttext beispielsweise lauten: "Fahr mal weiter, die Geschäfte am Marktplatz könnten dich interessieren."

Ist die Person 40 beispielsweise ein Paketbote, kann das Kraftfahrzeug 10 beispielsweise als Abholstation genutzt werden und in Antwort auf zum Beispiel eine entsprechende Anfrage zum Öffnen der Heckklappe des Paketboten kann das Kraftfahrzeug 10 beispielsweise antworten: "Die Heckklappe wir jetzt für 10 Sekunden geöffnet.". Hierbei kann vorzugsweise die bereits oben beschriebene Identifizierung der Person 40 als Bedingung für das Öffnen der Heckklappe vorgesehen sein.

Nähern sich beispielsweise mehrere Personen 40 dem Kraftfahrzeug 10, beispielsweise die ganze Familie des Halters des Kraftfahrzeugs 10, kann das Kraftfahrzeug 10 beispielsweise kontextbezogen den Halter des Kraftfahrzeugs 10 ansprechen: "Hallo Peter, pass auf, ich öffne dir jetzt die Tür." Optional kann nach kurzer Zeit eine Rückmeldung vorgesehen sein, beispielsweise mit dem Antworttext: "Achtung, das Kraftfahrzeug wird jetzt geschlossen.".

Bei einer personenspezifischen Kommunikation kann beispielsweise eine fremde Person 40 von dem Kraftfahrzeug 10 begrüßt werden mit: "Guten Tag.", während zum Beispiel die als Fahrzeughalterin identifizierte Person 40 begrüßt werden kann mit den Worten: "Guten Morgen liebe Julia, ich wünsche dir einen schönen Tag."

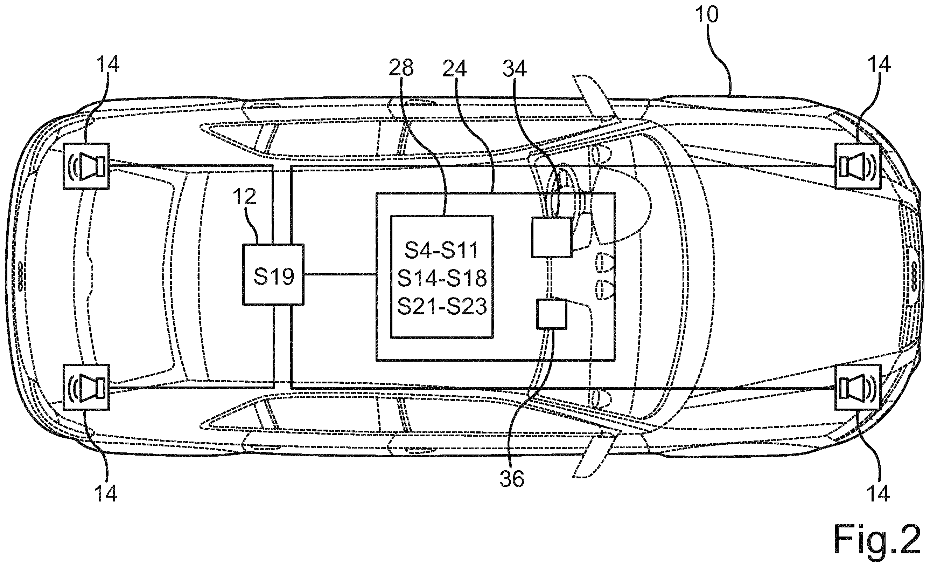

Die Fig. 2 zeigt ein Ausführungsbeispiel des Kraftfahrzeugs 10, das zum Beispiel dem Kraftfahrzeug 10 der Fig. 1 entsprechen kann. Der Schwerpunkt der Darstellung der Fig. 2 liegt dabei auf der Veranschaulichung möglicher Anordnungen der Lautsprecher 14, weswegen, aus Gründen der besseren Übersichtlichkeit, nicht alle Komponenten des Kraftfahrzeugs 10 gezeigt sind, wie sie bereits zur Fig. 1 beschrieben wurde. Das Kraftfahrzeug 10 in der Fig. 2 kann jedoch dem Kraftfahrzeug 10 der Fig. 1 entsprechen.

Die Fig. 2 veranschaulicht dabei eine besonders vorteilhafte Anordnung von zum Beispiel vier Lautsprechern 14 an jeweils beiden Seiten der Kraftfahrzeugfront und beiden Seiten des Kraftfahrzeughecks.

Insgesamt zeigen die Beispiele, wie durch die Erfindung eine Fahrzeugkommunikation mit Menschen über Außensoundlautsprecher 14 ermöglicht wird. Das Kraftfahrzeug 10 kann dabei mittels der Sprachanalyse- und Steuereinrichtung 24, die beispielsweise als Bordcomputer ausgestaltet sein kann, oder zum Beispiel eine künstliche Intelligenz aufweisen kann, und aktiv über Sprache mit der Person 40 über die Lautsprecher 14 kommunizieren.

Es ergeben sich die bereits oben genannten Vorteile.

Optional kann eine bessere Warnung von zum Beispiel Fußgängern oder Fahrradfahrern durch die zusätzliche Unterstützung der Lichtanlageeinrichtung 32 erfolgen, die vorzugsweise eine Anzeigefläche aufweisen kann, wobei die Anzeigefläche vorzugsweise am Kraftfahrzeug 10 angeordnet und beispielsweise als Display am Frontende ausgebildet sein und/oder einen Scheinwerfer aufweisen kann. Eine solche bessere Warnung kann durch Sprache erfolgen, zum Beispiel kann das Kraftfahrzeug 10 die Warnung "Achtung" oder zum Beispiel "Ich halte für Sie an - Sie können die Straße passieren." kommunizieren.

Gemäß einem weiteren Ausführungsbeispiel kann eine intensiviere Kommunikation zum Beispiel zwischen dem Fahrzeughalter, optional mit seinem Familienumfeld, und dem Kraftfahrzeug 10 erfolgen, wobei die Kommunikationsmöglichkeit, sowie eine optionale Bestätigung seitens des Kraftfahrzeugs 10, bereits vor einem Einstieg in das Kraftfahrzeug 10 erfolgen kann. Gemäß einem weiteren Ausführungsbeispiel können die oben beschriebenen Geschäftsfelder generiert werden.

Die Fig. 2 zeigt beispielhaft eine Darstellung von beispielhaften Außensoundlautsprechern 14, wobei vorzugsweise mindestens ein Lautsprecher 14, besonders vorzugsweise mindestens zwei Lautsprecher 14, jeweils an Front und Heck angeordnet sein können.

Gemäß einem weiteren Ausführungsbeispiel kann die Kommunikation des Kraftfahrzeugs 10 wie folgt technisch umgesetzt werde. Das Empfangen von Signalen für das Kraftfahrzeug 10, also das Empfangen des Sprachsignals (S4), kann zum Beispiel gemäß der folgenden beiden Varianten erfolgen. In einer ersten Variante kann die Person 40 mit dem Kraftfahrzeug 10 zum Beispiel durch ein Smartphone, eine Smartwatch, einen Autoschlüssel mit eingebautem Mikrofon oder einen implantierten Chip kommunizieren. Diese Signale können zum Beispiel "over the air", also drahtlos, zum Kraftfahrzeug 10 übertragen werden. In einer zweiten Variante kann das Kraftfahrzeug 10 zum Beispiel einen Sensor oder mehrere Sensoren aufweisen, und kann die Sprache erkennen.

Die Kommunikation des Kraftfahrzeugs 10 kann zum Beispiel über installierte Lautsprecher 14 nach einer Signalverarbeitung erfolgen. Die Signalverarbeitung kann dabei zum Beispiel wie bereits oben beschrieben erfolgen.

Gemäß einem weiteren Ausführungsbeispiel kann zum Beispiel eine so genannte "Community" des Kraftfahrzeugherstellers mit einbezogen werden, und optional eine Werbung als kontextbezogener Antworttext ausgegeben werden. In einem optionalen ersten Schritt kann zum Beispiel eine beliebige Person 40 sich in einer Nutzergruppe anmelden, beispielsweise über ein Anwenderprogramm ("App") des sozialen Netzwerks des Kraftfahrzeugherstellers. Die Nutzergruppe kann zum Beispiel ein System von Kraftfahrzeugen 10 umfassen, zum Beispiel alle Kraftfahrzeuge 10 des Kraftfahrzeugherstellers. In einem weiteren Schritt kann jeder Nutzer optional Interessen und/oder persönliche Daten an das System geben, optional auch seinen jeweiligen Standort freigeben. Die Standortfreigabe kann zum Beispiel über ein Smartphone, eine Smartwatch, einen Autoschlüssel oder einen implantierten Chip erfolgen. In einem dritten Schritt kann zum Beispiel ein Fahrzeughalter des Kraftfahrzeugs 10 Rechte freigeben, dass sein Kraftfahrzeug 10 mit anderen Personen 40 der Nutzergruppe des Kraftfahrzeugherstellers, beziehungsweise des Anwenderprogramms der Nutzergruppe des Kraftfahrzeugherstellers, kommunizieren darf. In einem optionalen vierten Schritt kann zum Beispiel jedes parkende und/oder fahrende Kraftfahrzeug des Kraftfahrzeugherstellers ein Person der Nutzergruppe erkennen, und kann diese dann zum Beispiel persönlich ansprechen ("Hallo Herr Mustermann - Wie geht es Ihnen? - Wie kann ich Ihnen behilflich sein? - Kennen Sie schon das Produkt A? - Suchen Sie ein Restaurant in der Nähe?").

Gemäß einem weiteren, bevorzugten Ausführungsbeispiel kann das Kraftfahrzeug 10 beispielsweise einen Fußgänger ansprechen, der zum Beispiel Mitglied der Nutzergruppe sein kann, und diesem aktiv Fragen beantworten oder diesen auf aktuelle Werbedeals ansprechen.

## Patentansprüche

1. Verfahren zum Betreiben einer Schallausgabeeinrichtung (12) und einer Lichtanlageeinrichtung (32) eines Kraftfahrzeugs (10), wobei die Lichtanlageeinrichtung (32) einen oder mehrere Scheinwerfer und/oder Blinker aufweist; das Verfahren aufweisend die durch eine Sprachanalyse- und Steuereinrichtung (24) durchgeführten Schritte:
- Empfangen eines Sprachsignals aus einer Spracherfassungseinrichtung (16, S4), wobei das empfangene Sprachsignal eine durch die Spracherfassungseinrichtung (16) erfasste Sprachnachricht einer Person (40), die sich in einer Außenumgebung (22) des Kraftfahrzeugs (10) befindet, beschreibt,
- anhand des empfangenen Sprachsignals: Ermitteln eines Sprachnachrichteninhalts der erfassten Sprachnachricht (S8) und eines thematischen Kontexts der erfassten Sprachnachricht (S9),
- in Abhängigkeit von dem ermittelten thematischen Kontext und dem ermittelten Sprachnachrichteninhalt: Bereitstellen eines Sprachausgabesignals (S17), das einen kontextbezogenen Antworttext zu der erfassten Sprachnachricht beschreibt,
- Übertragen des bereitgestellten Sprachausgabesignals an die Schallausgabeeinrichtung (12) zum Ausgeben des bereitgestellten Sprachausgabesignals (S19) an die Außenumgebung (22) des Kraftfahrzeugs (10, S18),
- Vorgeben der Lichtanlageeinrichtung (32) des Kraftfahrzeugs (10, S22), und
- Übertragen eines bereitgestellten Lichtmustersignals, das ein Lichtmuster beschreibt, an die vorgegebene Lichtanlageeinrichtung (32, S23) zum Ausgeben des Lichtmusters durch den einen oder die mehreren Scheinwerfer und/oder Blinker;
**dadurch gekennzeichnet, dass** das Lichtmustersignal in Abhängigkeit von dem ermittelten Sprachnachrichteninhalt und/oder in Abhängigkeit von dem ermittelten thematischen Kontext bereitgestellt wird (S21).

2. Verfahren nach Anspruch 1, aufweisend die durch die Sprachanalyse- und Steuereinrichtung (24) durchgeführten Schritte:
- Erzeugen eines Kontextsignals, das den ermittelten Sprachnachrichteninhalt beschreibt (S10),
- Übertragen des erzeugten Kontextsignals an eine Deep-Learning-Engine (28),
- Betreiben der Deep-Learning-Engine (28, S11), wobei durch die Deep-Learning-Engine (28) zu einer Vielzahl von Sprachnachrichteninhalten kontextbezogene Antworttexte statistisch zusammengefasst sind,
- Verarbeiten des durch das erzeugte Kontextsignal beschriebenen Sprachnachrichteninhalts mittels der Deep-Learning-Engine (28, S12) und hierdurch Ermitteln des kontextbezogenen Antworttextes (S16), der mit einer vorbestimmten Wahrscheinlichkeit benutzerspezifisch und/oder situationsspezifisch eine kontextspezifische Antwort auf die Spracheingabe und für einen kontextspezifischen Dialog mit der Person (40) geeignet ist (S13),
- Bereitstellen des Sprachausgabesignals (S17) durch Erzeugen des Sprachausgabesignals, das den ermittelten, kontextbezogenen Antworttext beschreibt.

3. Verfahren nach einem der vorhergehenden Ansprüche, aufweisend den durch die Sprachanalyse- und Steuereinrichtung (24) durchgeführten Schritt:
- Feststellen einer Identität der Person (40), vorzugsweise anhand der erfassten Sprachnachricht (S5),
wobei das Ermitteln des thematischen Kontexts der erfassten Sprachnachricht (S9) anhand der festgestellten Identität erfolgt.

4. Verfahren nach Anspruch 3, aufweisend den durch die Sprachanalyse- und Steuereinrichtung (24) durchgeführten Schritt:
- anhand der festgestellten Identität der Person (40): Prüfen, ob die festgestellte Identität eine vorgegebene Benutzungsbedingung erfüllt, wobei die vorgegebene Benutzungsbedingung ein Vorliegen einer Berechtigung der Person (40) zum Benutzen des Kraftfahrzeugs (10) vorschreibt (S6),
wobei das Bereitstellen des Sprachausgabesignals (S17) und/oder das Übertragen des bereitgestellten Sprachausgabesignals (S18) nur dann erfolgen, falls die vorgegebene Benutzungsbedingung erfüllt ist.

5. Verfahren nach einem der vorhergehenden Ansprüche, aufweisend die durch die Sprachanalyse- und Steuereinrichtung (24) durchgeführten Schritte:
- Feststellen einer relativen Position der Person (40) zum Kraftfahrzeug (S7), und
- in Abhängigkeit von der festgestellten relativen Position der Person (40): Feststellen eines Lautsprechers (14), der ein vorgegebenes Ausrichtungskriterium erfüllt, wobei das vorgegebene Ausrichtungskriterium eine Ausrichtung des Lautsprechers (14) zu der Person (40) hin vorgibt,
wobei das erzeugte Sprachausgabesignal den festgestellten Lautsprecher (14) zum Ausgeben des bereitgestellten Sprachausgabesignals (S19) vorgibt.

6. Verfahren nach einem der vorhergehenden Ansprüche, wobei das Bereitstellen des Sprachausgabesignals die durch die Sprachanalyse- und Steuereinrichtung (24) durchgeführten Schritte umfasst:
- anhand des ermittelten Sprachnachrichteninhalts: Ermitteln eines Zielorts der Person (40, S14),
- Ermitteln einer Route von einem aktuellen Standort der Person (40) und/oder von einem aktuellen Standort des Kraftfahrzeugs (10) zu dem ermittelten Zielort (S15),
wobei der kontextbezogene Antworttext eine Wegbeschreibung von dem aktuellen Standort zu dem ermittelten Zielort entlang der ermittelten Route umfasst.

7. Verfahren nach einem der vorhergehenden Ansprüche, wobei das Lichtmustersignal auch in Abhängigkeit von einer durch eine Sensoreinrichtung (44) des Kraftfahrzeugs (10) erfassten Blickrichtung der Person (40, S20) bereitgestellt wird (S21).

8. Verfahren nach einem der vorhergehenden Ansprüche, wobei die Sprachanalyse- und Steuereinrichtung (24) das Sprachsignal aus einer Spracherfassungseinrichtung (16) des Kraftfahrzeugs (10) empfängt; das Verfahren aufweisend die durch die Sprachanalyse- und Steuereinrichtung (24) durchgeführten Schritte:
- Empfangen eines weiteren Sprachsignals aus einer weiteren, kraftfahrzeugexternen Spracherfassungseinrichtung (16, S4), vorzugsweise aus einer Spracherfassungseinrichtung (16) eines mobilen Endgeräts (50) oder aus einer Spracherfassungseinrichtung (16), die an oder in der Person (40) angeordnet ist,
- Ermitteln, welche der Sprachnachrichten eine bessere Qualität aufweist als die andere der Sprachnachrichten,
wobei das Ermitteln des Sprachnachrichteninhalts (S8) und des thematischen Kontexts (S9) anhand derjenigen Sprachnachricht erfolgt, die die bessere Qualität aufweist, und wobei das Bereitstellen des Sprachausgabesignals anhand der Sprachnachricht ermittelten Sprachnachricht mit der besseren Qualität und dem entsprechenden thematischen Kontext erfolgt (S17).

9. Sprachanalyse- und Steuereinrichtung (24), die dazu eingerichtet ist, die eine Sprachanalyse- und Steuereinrichtung (24) betreffenden Verfahrensschritte gemäß einem der vorhergehenden Ansprüche durchzuführen.

10. Kraftfahrzeug (10), aufweisend eine Schallausgabeeinrichtung (12) und eine Lichtanlageeinrichtung (32), wobei die Schallausgabeeinrichtung (12) dazu ausgestaltet ist, ein Sprachausgabesignal an eine Außenumgebung (22) des Kraftfahrzeugs (10) auszugeben; wobei die Lichtanlageeinrichtung (32) einen oder mehrere Scheinwerfer und/oder Blinker aufweist; und wobei das Kraftfahrzeug (10) durch eine Sprachanalyse- und Steuereinrichtung (24) nach Anspruch 9 gekennzeichnet ist.

11. Kraftfahrzeugexterne Servereinrichtung (24), aufweisend eine Sprachanalyse- und Steuereinrichtung (24) nach Anspruch 9.

## Claims

1. Method for operating a sound output device (12) and a lighting system device (32) of a motor vehicle (10), wherein the lighting system device (32) has one or more headlights and/or indicator lights; the method having the following steps carried out by a voice-analysis and control device (24):
- receiving a voice signal from a voice capture device (16, S4), wherein the received voice signal describes a voice message captured by the voice capture device (16) of a person (40) located in an external environment (22) of the motor vehicle (10),
- using the received voice signal: ascertaining a voice message content of the captured voice message (S8) and a thematic context of the captured voice message (S9),
- in dependence on the ascertained thematic context and the ascertained voice message content: providing a voice output signal (S17), which describes a context-related response text to the captured voice message;
- transmitting the provided voice output signal to the sound output device (12) for outputting the provided voice output signal (S19) to the external environment (22) of the motor vehicle (10, S18),
- specifying the lighting system device (32) of the motor vehicle (10, S22), and
- transmitting a provided light pattern signal, which describes a light pattern, to the specified lighting system device(32, S23) for outputting the light pattern by the one or more headlights and/or indicator lights;
**characterised in that**
the light pattern signal is provided in dependence on the ascertained voice message content and/or on the ascertained thematic context (S21).

2. Method according to claim 1, having the following steps carried out by voice-analysis and control device (24):
- generating a context signal that describes the ascertained voice message content (S10),
- transmitting the generated context signal to a deep learning engine (28),
- operating the deep learning engine (28, S11), wherein context-related response texts are statistically summarised by the deep learning engine (28) for a plurality of voice message contents,
- processing the voice message content described by the generated context signal by means of the deep learning engine (28, S12) and thereby ascertaining the context-specific response text (S16) which is with a predetermined probability a user-specific and/or situation-specific context-specific response to the voice input and is suitable for a context-specific dialogue with the person (40) (S13),
- providing the voice output signal (S17) by generating the voice output signal which describes the ascertained context-related response text.

3. Method according to any one of the preceding claims, having the following steps carried out by voice-analysis and control device (24):
- determining an identity of the person (40) using the captured voice message (S5),
wherein the ascertaining of the of the thematic context of the captured voice message (S9) occurs using the determined identity.

4. Method according to claim 3, having the following steps carried out by voice-analysis and control device (24):
- using the determined identity of the person (40): checking whether the determined identity satisfies a specified usage condition, wherein the specified usage condition prescribes the presence of an authorisation for the person (40) to use the motor vehicle (10) (S6),
wherein the provision of the voice output signal (S17) and/or the transmission of the provided voice output signal (S18) only occurs if the specified usage condition is satisfied.

5. Method according to any one of the preceding claims, having the following steps carried out by voice-analysis and control device (24):
- determining a relative position of the person (40) to the motor vehicle (S7), and
- in dependence on the determined relative position of the person (40): determination of a loudspeaker (14) which satisfies a specified orientation criterion, wherein the specified orientation criterion specifies an orientation of the loudspeaker (14) towards the person (40),
wherein the generated voice output signal specifies the determined loudspeaker (14) for output of the provided voice output signal (S19).

6. Method according to any one of the preceding claims, wherein the providing of the voice output signal comprises the following steps carried out by the voice-analysis and control device (24):
- using the ascertained voice message content: ascertaining a destination of the person (40, S14),
- ascertaining a route from a current location of the person (40) and/or from a current location of the motor vehicle (10) to the ascertained destination (S15), wherein the context-related response text comprises a route description from the current location to the ascertained destination along the ascertained route.

7. Method according to any one of the preceding claims,
wherein the light pattern signal is also provided (S21) in dependence on a viewing direction of the person (40, S20) captured by a sensor device (44) of the motor vehicle (10).

8. Method according to any one of the preceding claims, wherein the voice-analysis and control device (24) receives the voice signal from a voice capture device (16) of the motor vehicle (10); the method having the following steps carried out by voice-analysis and control device (24):
- receiving a further voice signal from an additional motor vehicle-external voice capture device (16, S4), preferably from a voice capture device (16) of a mobile terminal device (50), or from a voice capture device (16) which is arranged on or in the person (40),
- ascertaining which of the voice messages has a better quality that the other, wherein the ascertaining of the voice message content (S8) and of the thematic context (S9) occurs using the voice message that has the better quality, and wherein the providing of the voice output signal occurs using the voice message that has the better quality and the corresponding thematic context (S17).

9. Voice-analysis and control device (24), which is configured to carry out the method steps according to any one of the preceding claims that involve a voice-analysis and control device (24).

10. Motor vehicle (10), having a sound output device (12) and a lighting system device (32), wherein the sound output device (12) is adapted to output a voice output signal to an external environment (22) of the motor vehicle (10); wherein the lighting system device (32) has one or more headlights and/or indicator lights; and wherein the motor vehicle (10) is **characterised by** a voice-analysis and control device (24) according to claim 9.

11. Motor vehicle-external server device (24), having a voice-analysis and control device (24) according to claim 9.

## Revendications

1. Procédé de fonctionnement d'un dispositif d'émission sonore (12) et d'un dispositif de système d'éclairage (32) d'un véhicule automobile (10), dans lequel le dispositif de système d'éclairage (32) présente un ou plusieurs phares et/ou clignotants ; le procédé présentant les étapes réalisées par un dispositif d'analyse et de commande de la parole (24) consistant à :
- recevoir un signal vocal provenant d'un dispositif de détection de la parole (16, S4), dans lequel le signal vocal reçu décrit un message vocal d'une personne (40) qui se trouve dans un environnement extérieur (22) du véhicule automobile (10) détecté par le dispositif de détection de la parole (16),
- à l'aide du signal vocal reçu : déterminer un contenu de message vocal du message vocal détecté (S8) et un contexte thématique du message vocal détecté (S9),
- en fonction du contexte thématique déterminé et du contenu de message vocal déterminé : fournir un signal d'émission vocal (S17) qui décrit un texte de réponse contextuel au message vocal détecté,
- transmettre le signal d'émission vocal fourni au dispositif d'émission sonore (12) pour l'émission du signal d'émission vocal fourni (S19) à l'environnement extérieur (22) du véhicule automobile (10, S18),
- spécifier le dispositif de système d'éclairage (32) du véhicule automobile (10, S22), et
- transmettre un signal de motif lumineux fourni qui décrit un motif lumineux au dispositif de système d'éclairage prédéterminé (32, S23) pour l'émission du motif lumineux par l'un ou les plusieurs phares et/ou clignotants ;
**caractérisé en ce que**
le signal de motif lumineux est fourni en fonction du contenu du message vocal déterminé et/ou en fonction du contexte thématique déterminé (S21).

2. Procédé selon la revendication 1, présentant les étapes réalisées par le dispositif d'analyse et de commande de la parole (24), consistant à :
- générer un signal de contexte qui décrit le contenu de message vocal déterminé (S10),
- transmettre le signal de contexte généré à un moteur d'apprentissage profond (28),
- exploiter le moteur d'apprentissage profond (28, S11), dans lequel le moteur d'apprentissage profond (28) résume statistiquement des textes de réponse liés au contexte à une pluralité de contenus de messages vocaux,
- traiter le contenu de message vocal décrit par le signal de contexte généré au moyen du moteur d'apprentissage profond (28, S12) et déterminer ainsi le texte de réponse contextuel (S16) qui, avec une probabilité prédéterminée, est spécifique à l'utilisateur et/ou à la situation, une réponse spécifique au contexte à l'entrée vocale, et est adapté pour un dialogue spécifique au contexte avec la personne (40) (S13),
- fournir le signal d'émission vocal (S17) en générant le signal d'émission vocal qui décrit le texte de réponse spécifique au contexte déterminé.

3. Procédé selon l'une quelconque des revendications précédentes, présentant l'étape réalisée par le dispositif d'analyse et de commande de la parole (24), consistant à :
- déterminer une identité de la personne (40), de préférence à l'aide du message vocal détecté (S5),
dans lequel la détermination du contexte thématique du message vocal détecté (S9) est effectuée à l'aide de l'identité déterminée.

4. Procédé selon la revendication 3, présentant l'étape réalisée par le dispositif d'analyse et de commande de la parole (24), consistant à :
- à l'aide de l'identité déterminée de la personne (40) : vérifier si l'identité déterminée satisfait une condition d'utilisation prédéterminée, dans lequel la condition d'utilisation prédéterminée exige (S6) la présence d'une autorisation de la personne (40) pour l'utilisation du véhicule automobile (10),
dans lequel la fourniture du signal d'émission vocal (S17) et/ou la transmission du signal d'émission vocal fourni (S18) est effectuée uniquement si la condition d'utilisation prédéterminée est satisfaite.

5. Procédé selon l'une quelconque des revendications précédentes, présentant les étapes réalisées par le dispositif d'analyse et de commande de la parole (24), consistant à :
- déterminer une position relative de la personne (40) par rapport au véhicule automobile (S7), et
- en fonction de la position relative déterminée de la personne (40) : déterminer un haut-parleur (14) qui satisfait un critère d'alignement prédéterminé, dans lequel le critère d'alignement prédéterminé spécifie une orientation du haut-parleur (14) par rapport à la personne (40),
dans lequel le signal d'émission vocal généré prédétermine le haut-parleur détecté (14) pour émettre le signal d'émission vocal fourni (S19).

6. Procédé selon l'une quelconque des revendications précédentes, dans lequel la fourniture du signal d'émission vocal comprend les étapes réalisées par le dispositif d'analyse et de commande de la parole (24) :
- à l'aide du contenu de message vocal déterminé : déterminer un emplacement de destination de la personne (40, S14),
- déterminer un itinéraire à partir d'un emplacement actuel de la personne (40) et/ou d'un emplacement actuel du véhicule automobile (10) vers l'emplacement de destination déterminé (S15), dans lequel le texte de réponse contextuel comprend une description d'itinéraire de l'emplacement actuel jusqu'à l'emplacement de destination déterminé le long de l'itinéraire déterminé.

7. Procédé selon l'une quelconque des revendications précédentes,
dans lequel le signal de motif lumineux est également fourni (S21) en fonction d'une direction de vision de la personne (40, S20) détectée par un dispositif de détection (44) du véhicule automobile (10).

8. Procédé selon l'une quelconque des revendications précédentes, dans lequel le dispositif d'analyse et de commande de la parole (24) reçoit le signal vocal d'un dispositif de détection de la parole (16) du véhicule automobile (10) ; le procédé présentant les étapes réalisées par le dispositif d'analyse et de commande de la parole (24), consistant à :
- recevoir un autre signal vocal provenant d'un autre dispositif de détection de la parole (16, S4) extérieur au véhicule automobile, de préférence d'un dispositif de détection de la parole (16) d'un terminal mobile (50) ou d'un dispositif de détection de la parole (16) disposé sur ou dans la personne (40),
- déterminer lequel des messages vocaux a une meilleure qualité que l'autre des messages vocaux,
dans lequel la détermination du contenu de message vocal (S8) et le contexte thématique (S9) à l'aide du message vocal ayant la meilleure qualité est réalisée, et dans lequel la fourniture du signal d'émission vocal à l'aide du message vocal déterminé comme ayant la meilleure qualité et le contexte thématique correspondant est réalisée (S17).

9. Dispositif d'analyse et de commande de la parole (24) qui est configuré pour réaliser les étapes du procédé relatif à un dispositif d'analyse et de commande de la parole (24) selon l'une quelconque des revendications précédentes.

10. Véhicule automobile (10) présentant un dispositif d'émission sonore (12) et un dispositif de système d'éclairage (32), dans lequel le dispositif d'émission sonore (12) est conçu pour émettre un signal d'émission vocal vers un environnement extérieur (22) du véhicule automobile (10) ; dans lequel le dispositif de système d'éclairage (32) présente un ou plusieurs phares et/ou clignotants ; et dans lequel le véhicule automobile (10) est **caractérisé par** un dispositif d'analyse et de commande de la parole (24) selon la revendication 9.

11. Dispositif de serveur externe de véhicule automobile (24) présentant un dispositif d'analyse et de commande de la parole (24) selon la revendication 9.
